# EUROPÄISCHE PATENTSCHRIFT

(11) **EP 1 794 477 B1**
(45) Veröffentlichungstag und Bekanntmachung des Hinweises auf die Patenterteilung: **23.01.2008**
(21) Anmeldenummer: 05774077.1
(22) Anmeldetag: 16.08.2005
(51) Int. Cl.: F16H 57/02, F16C 17/10

(54) **GETRIEBE-ANTRIEBSEINHEIT MIT EINEM EINSTELLELEMENT**
GEARBOX DRIVE UNIT COMPRISING A REGULATING ELEMENT
UNITE D'ENTRAINEMENT A ENGRENAGE COMPRENANT UN ELEMENT DE REGLAGE

(30) Priorität: 23.09.2004 DE 102004046094
(43) Veröffentlichungstag der Anmeldung: 13.06.2007
(73) Patentinhaber: ROBERT BOSCH GMBH, 70442 Stuttgart (DE)
(72) Erfinder: OBERLE, Hans-Juergen, 76437 Rastatt (DE); SCHWENDEMANN, Franz, 77833 Ottersweier (DE); LIENIG, Andreas, 77815 Buehl (DE)
(86) Internationale Anmeldenummer: PCT/EP2005/054026
(87) Internationale Veröffentlichungsnummer: WO 2006/032584

(56) Entgegenhaltungen:
- DE-A1- 3 150 572
- DE-A1- 10 141 113
- DE-A1- 19 513 970
- US-A- 3 774 981

## Beschreibung

### Stand der Technik

Die Erfindung betrifft eine Getriebe-Antriebseinheit mit einem Einstellelement, sowie ein Verfahren zur Herstellung einer solchen nach der Gattung der unabhängigen Ansprüche.

Mit der gattungsgemäßen DE 31 50 572 A1 ist eine Antriebseinheit bekannt geworden, bei der die Fertigungstoleranzen zwischen der Ankerwelle und dem diese lagernden Gehäuse mittels einer Einstellschraube eliminiert werden. Dazu weist das Gehäuse ein Innengewinde auf, in das die Einstellschraube mittels eines Außengewindes eingreift. Zum Axialspielausgleich der Ankerwelle wird die Einstellschraube mit einer Anschlagsfläche gegen die Stirnseite der Rotorwelle geschraubt.

Bei einer solchen Vorrichtung ist das Anfertigen eines Gewindes an dem Gehäuse, und an der Einstellschraube relativ aufwändig. Des weiteren kann die Anpresskraft der Schraube gegen die Stirnseite der Rotorwelle nicht exakt vorgegeben werden, da beim Einschrauben im Gewinde undefinierte Reibungskräfte auftreten. Außerdem eignet sich eine solche Einstellschraube nicht für eine Zentrierung des Einstellelements derart, dass die Welle radial lagernd im Einstellelement aufgenommen werden kann.

### Vorteile der Erfindung

Die erfindungsgemäße Vorrichtung und das Verfahren zur Herstellung einer solchen Vorrichtung mit den Merkmalen der unabhängigen Ansprüche haben den Vorteil, dass durch das axiale Einschieben des Einstellelements in das Gehäuse eine definierte Anpresskraft gegen die Stirnseite des Rotationskörpers vorgegeben werden kann. Beim Einschieben des Einstellelements zentriert sich dieses gegenüber dem Gehäuse derart, dass die radiale Lagerfläche des Einstellelements passgenau den Rotationskörper aufnimmt, um diesen radial im Einstellelement zu lagern. Hierdurch können Einbautoleranzen des Rotationskörpers ausgeglichen werden, da das Einstellelement erst nach dem axialen Aufschieben auf den Rotationskörper durch eine Drehung im Gehäuse axial und radial gesichert wird.

Durch die in den Unteransprüchen angegebenen Maßnahmen sind vorteilhafte Weiterbildungen der Vorrichtung und des Herstellungsverfahrens nach den unabhängigen Ansprüchen möglich. Ist die radiale Lagerfläche des Einstellelements als umlaufende Zylindermantelfläche einer zylindrischen Aussparung ausgebildet, wird der Rotationskörper über dessen gesamten Umfang gleichmäßig radial abgestützt. Aufgrund der Zentrierung des Einstellelements im Gehäuse ist dadurch ein sehr gleichmäßiger Rundlauf des Rotationskörpers gewährleistet. Die zylinderförmige Aussparung des Einstellelements kann dabei je nach Ausführung des Rotationskörpers als Sackloch, oder als Durchgangsöffnung ausbildet sein.

Zur axialen Fixierung des Einstellelements im Gehäuse ist über einen bestimmten axialen Abschnitt des Einstellelements ein axialer Haltebereich ausgebildet, der durch eine Drehung des Einstellelements dieses axial gegenüber dem Gehäuse verriegelt. Dazu weist der Haltebereich über dessen Umfang unterschiedliche Außendurchmesser auf, sodass bei einer Drehung des Haltebereichs die Umfangsflächen mit größerem Durchmesser mit der entsprechenden Gegenfläche des Gehäuses verschiebefest zusammenwirken.

Durch die Ausbildung eines Außenprofils, beispielsweise einer Rändelung oder umlaufenden Rillen kann die Reibkraft zwischen dem Einstellelement und der Innenform der Gehäusewand erhöht werden, wodurch das Einstellelement zuverlässig an einer axialen Verschiebung oder einer Rotation gehindert wird.

Zur Abstützung hoher axialer Betriebskräfte ist es von Vorteil, dass das Außenprofil nach dem Verdrehen gegenüber dem Gehäuse einen Formschluss mit diesem bildet. Besonders günstig ist dabei, wenn das Außenprofil radiale Ausformungen aufweist, die sich selbstschneidend in die Innenwand des Gehäuses eindringen.

Zur Ausbildung einer zuverlässigen formschlüssigen Verbindung weist der Haltebereich Abschnitte mit einem größeren Außendurchmesser auf, die fließen in Bereiche mit kleinerem Außendurchmesser übergehen. Dadurch ist der Umfang des Haltebereichs wellenförmig ausgebildet, wobei dieser wellenförmige Umfang des Haltebereichs in eine entsprechende wellenförmige Innenfläche des Gehäuses einschiebbar ist. Werden diese beiden wellenförmigen Oberflächen gegeneinander verdreht, ist nur ein relativ kleines Drehmoment notwendig um die Bereiche mit sich überschneidenden Durchmessern formschlüssig ineinander zu pressen.

Weist das Einstellelement beispielsweise axial benachbart zum Haltebereich einen Führungsbereich auf, der in einer Innenführungsfläche des Gehäuses geführt wird, kann dadurch eine sehr genau Zentrierung des Einstellelements, und damit eine exakte radiale Lagerung des Rotationsköpers erzielt werden. Besonders günstig ist es dabei, wenn der Führungsbereich einen kreisrunden Durchmesser mit einer glatten Oberfläche aufweist.

Die erfindungsgemäße Ausführung des Einstellelements eignet sich besonders für ein rohrFörmiges Getriebegehäuse, z. B. eines Spindelantriebs, wobei das Einstellelement den als Schneckenrad ausgebildeten Rotationsköpers sowohl axial als auch radial lagert. Das Schneckenrad kann dabei am Ende einer Spindel angeordnet sein, oder von einer durchtauchenden Spindel durchdrungen werden.

Zur günstigen Montage des Einstellelements weist dieses ein Mitnahmeelement - insbesondere eine Ausnehmung - auf, das formschlüssig mit einem Montagwerkzeug zusammenwirkt, um das Einstellelement in der Innenform des Gehäuses um den Bruchteil einer Umdrehung zu verdrehen.

Durch das erfindungsgemäße Herstellungsverfahren kann eine Getriebe-Antriebseinheit - insbesondere ein Spindelantrieb - sehr kostengünstig hergestellt werden, da keine zusätzlichen Teile zur Fixierung des Einstellelements notwendig sind. Das Einstellelement übernimmt gleichzeitig die axiale und radiale Lagerfunktion, als auch die Abstützung axialer Betriebskräfte. Durch die definiert einstellbare axiale Anpresskraft kann dabei ein zuverlässiger Axialspielausgleich über die gesamte Lebensdauer der Antriebseinheit erzielt werden.

### Zeichnungen

In den Zeichnungen sind verschiedene Ausführungsbeispiele einer erfindungsgemäßen Vorrichtung dargestellt und in der nachfolgenden Beschreibung näher erläutert.

Es zeigen
- Figur 1: einen Schnitt durch eine erfindungsgemäße Getriebe-Antriebseinheit,
- Figur 2: eine Seitenansicht der Antriebseinheit aus Figur 1 gemäß II,
- Figur 3: einen Schnitt durch die Antriebseinheit in Figur 1 gemäß 111-111 und
- Figur 4: ein weiteres Ausführungsbeispiel einer erfindungsgemäßen Antriebseinheit.

### Beschreibung

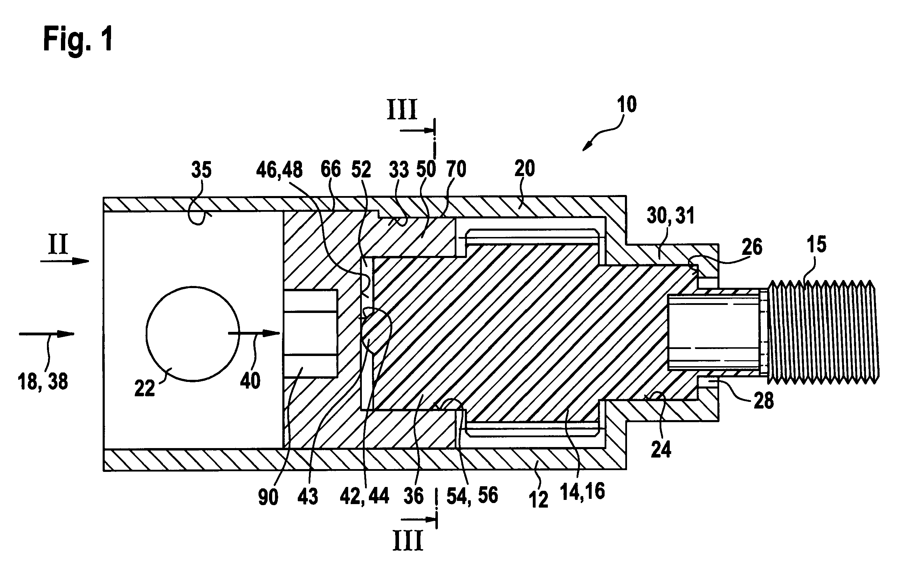

In Figur 1 ist eine Getriebe-Antriebseinheit 10 dargestellt, bei der ein Rotationskörper 14 in einem Gehäuse 12 angeordnet ist. Die Getriebe-Antriebseinheit 10 ist beispielsweise als Spindelantrieb 10 ausgebildet, bei der als Rotationskörper 14 eine Spindel 15 mit einem darauf angeordneten Schneckenrad 16 im Gehäuse 12 gelagert ist. Das Schneckenrad 16 ist beispielsweise als Kunststoff Spritzgussteil am Ende der Spindel 15 aufgespritzt und steht in Wirkverbindung mit einer nicht dargestellten Schneckenwelle eines Antriebsmotors. Zur Aufnahme von großen axialen Kräften 18 - beispielsweise Crash-Kräfte bei einem Sitzverstellantrieb - ist das Gehäuse 12 als rohrförmiger Metallkäfig 20 ausgebildet. Zur Befestigung des Gehäuses 12 weist dieses eine Durchgangsbohrung 22 zur Aufnahme eines Bolzens auf, der an der Karosserie oder am Sitzgestell angeordnet ist. Ist das Gehäuse 12 beispielsweise fest am Sitz befestigt, und wird das Schneckenrad 16 über einen Elektromotor in Bewegung versetzt, dreht sich die drehfest mit dem Schneckenrad 16 verbundene Spindel 15, die beispielsweise in eine an der Karosserie befestigten Gewindemutter greift. Dadurch wird eine Relativbewegung zwischen dem Sitz und der Karosserie, bzw. zwischen unterschiedlichen beweglichen Teilen erzeugt.

Das Gehäuse 12 weist einen ersten Bereich 30 auf, der als Lagerstelle 31 für den Rotationskörper 14 ausgebildet ist. Die Lagerstelle 31 weist dabei eine kreisrunde Innenwand 24 auf, an der der Rotationskörper 14 radial anliegt. Die Lagerstelle 31 weist des weiteren einen axialen Bund 26 auf, an dem der Rotationskörper 14 direkt, oder über eine zusätzliche Anlaufscheibe (27) axial anliegt. Nachdem bei der Montage der Rotationskörper 14 in axialer Richtung 38 in das Gehäuse 12 eingeschoben wird (in Figur 1 von links), derart dass die Spindel 15 durch einen Durchbruch 28 des Gehäuses 12 am axialen Bund 26 ragt, wird anschließend ein Einstellelement 50 axial in das Gehäuse 12 eingeschoben. Das Einstellelement 50 hat die Aufgabe, den Rotationskörper 14 im Normalbetrieb an dem dem axialen Bund 26 gegenüberliegenden Ende 36 sowohl axial, als auch radial zu lagern. Dazu wird das Einstellelement 50 in axialer Richtung 38 mit einer wählbaren Anpresskraft 40 gegen eine Stirnseite 42 des Rotationskörpers 14 gepresst und anschließend durch eine Drehung 39 um einen Bruchteil von 360° gegen axiales Verschieben verriegelt. Im Ausführungsbeispiel gemäß Figur 1 ist die Stirnfläche 42 als Kugel 43 mit einem Radius 44 ausgebildet, die an einer axialen Anlauffläche 46 des Einstellelements 50 anliegt. Im Einstellelement 50 ist eine zylinderförmige Aussparung 52 mit einer Bodenfläche 48 ausgeformt, die als axiale Anlauffläche 46 für die Stirnfläche 42 des Rotationskörpers 14 dient. Die zylinderförmige Aussparung 52 bildet des weiteren eine Zylinderwand 54, in der als radiale Lagerfläche 56 des Einstellelements 50 der Rotationskörper 14 im Normalbetrieb radial anliegt. Zur radialen Zentrierung des Einstellelements 50 weist dieses einen axialen Abschnitt auf, der als Führungsbereich 66 ausgebildet ist. Der Führungsbereich 66 hat im Ausführungsbeispiel einen kreisrunden Umfang 68, der beim Einschieben in axialer Richtung 38 in einen korrespondierenden kreisrunden Zentrierabschnitt 35 des Gehäuses 12 zentriert wird. Somit stützt sich das Ende 36 des Rotationskörpers 14 im Normalbetrieb über den Zylindermantel 54 des Einstellelements 50 über den Führungsbereich 66 radial am Gehäuse 12 ab.

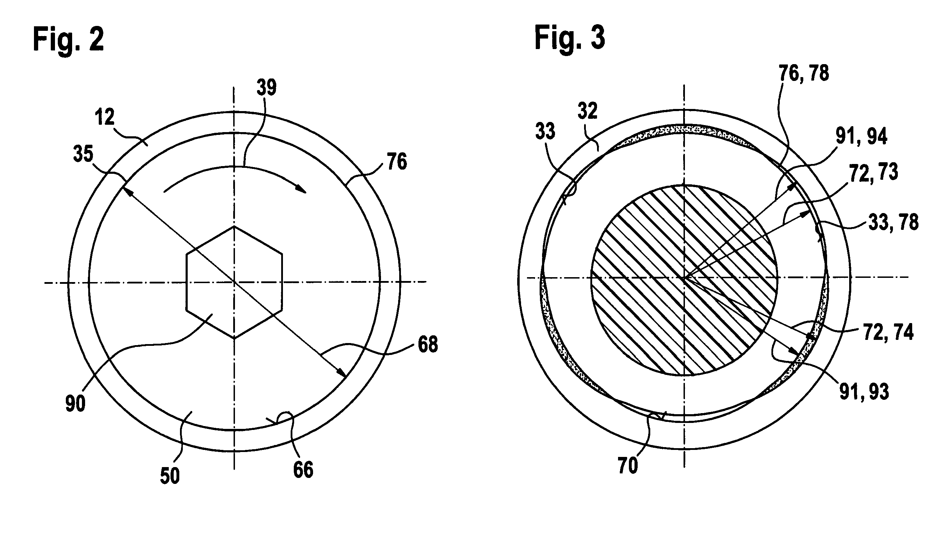

Die radiale Führung des Einstellelements 50 ist in Figur 2 in einer Seitenansicht der Getriebe-Antriebseinheit 10 von Figur 1 von links ersichtlich, wobei der über den Umfang 76 gleichbleibende Durchmesser 68 des Führungsbereichs 66 im korrespondierenden kreisrunden Zentrierabschnitt 35 des Gehäuses 12 geführt ist. Dabei bildet des Einstellelement 50 mit dem Gehäuse 12 einen mit geringer Kraft beweglichen Schiebesitz.

Zur Eliminierung des Axialspiels, weist das Einstellelement 50 einen Haltebereich 70 auf, mittels dessen das Einstellelement 50 durch eine Drehung im Gehäuse 12 axial verriegelbar ist. Wie in Figur 3 - einem Schnitt durch die Getriebe-Antriebseinheit 10 aus Figur 1 durch den Haltebereich 70 - dargestellt, weist der Haltebereich 70 einen veränderlichen Radius 72 mit einem minimalen Radius 73 und einem maximalen Radius 74 auf. Der minimale Radius 73 geht dabei bezüglich der Umfangsrichtung kontinuierlich in den maximalen Radius 74 über. Dadurch weist der Haltebereich 70 einen Umfang 76 auf, der als n-eckiger Polygonzug 78 ausgebildet ist. Im Ausführungsbeispiel ist n=3, womit der Querschnitt des Haltebereichs 70 auch als Dreieck mit stark abgerundeten Ecken angesehen werden kann. Der Haltebereich 70 wird bei der Montage in Axialrichtung 38 in einen korrespondierenden Verriegelungsabschnitt 32 des Gehäuses 12 eingeschoben, wobei der Verriegelungsabschnitt 32 eine zum Umfang 76 des Haltebereichs 70 korrespondierende Innenform 33 aufweist. In Figur 3 ist diese Innenform 33 ebenfalls als 3-eckiger Polygonzug mit drei minimalen und drei maximalen Durchmessern 93, 94 ausgebildet. Zur axialen Verriegelung des Einstellelements 50 wird dieses bei der Montage beispielsweise um 60° verdreht, sodass sich die Stellen mit den maximalen Radien 74 des Halteelements 70 in die Bereiche der minimalen Radien 93 der Innenform 33 pressen. Um dem Reibschluss zwischen dem Haltebereich 70 und der Innenform 33 des Gehäuses 12 zu erhöhen, weist der Haltebereich 70 ein Außenprofil 80 auf, das beispielsweise als Rändel oder als Gewinderillen ohne Steigung ausgebildet ist.

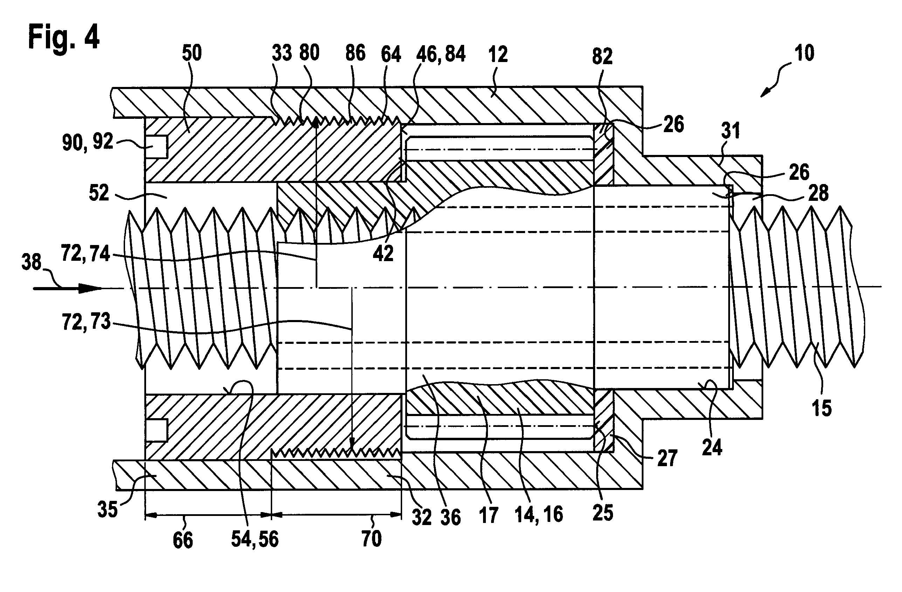

Figur 4 zeigt ein weiteres Ausfiihrungsbeispiel, bei der die Getriebe-Antriebseinheit 10 als durchtauchendes Spindel-Getriebe ausgebildet ist. Der Rotationskörper 14 ist wiederum als Schneckenrad 16 ausgebildet, das jedoch hier als Hülse 17 drehbar auf der Spindel 15 angeordnet ist. Wird der Rotationskörper 14 über ein Schneckengetriebe in Rotation versetzt, führt die Spindel 15 eine Linearbewegung in axialer Richtung 38 aus, mittels derer bewegliche Teile verstellt werden können. Der Rotationskörper 14 ist wie in Figur 1 auf der Seite des Durchbruchs 28 radial im Gehäuse 12 gelagert. Die axiale Lagerung am Gehäuse 12 erfolgt hier beispielsweise über ein elastisches Element 82, das über die Lebensdauer des Getriebes 10 Materialverluste durch Verschleiß ausgleichen soll. Über das elastische Element 82 stützt sich somit der Rotationskörper 14 an einer axialen Seite 25 am axialen Bund 26 ab. Die Stirnfläche 42 des Rotationskörpers 14 ist jedoch aufgrund der Hülsenform 17 ebenfalls ringförmig ausgebildet. Entsprechend ist die zylinderförmige Aussparung 52 des Einstellelements 50 durchgängig ausgebildet, sodass die axiale Anlauffläche 46 des Einstellelements 50 als Ringfläche 84 ausgebildet ist. Der Haltebereich 70 weist in diesem Ausführungsbeispiel als Außenprofil 80 umlaufende selbstschneidende Kanten 64 auf, die sich bei einer Drehung 39 in die Innenform 33 des Verriegelungsabschnitts 32 des Gehäuses 12 einschneiden. Dadurch wird eine formschlüssige Verriegelung erzeugt, die sehr große axiale Kräfte aufnehmen kann. Die selbstschneidenden Kanten 64 sind an mehreren axial beabstandeten radialen Stegen 86 angeformt, deren Radius 72 über den Umfang variiert. Dabei kann der Umfang 76 wie beim Ausführungsbeispiel von Figur 1 wiederum als n-eckiger Polygonzug 78 ausgebildet sein, oder Absätze entsprechend einer Sprungfunktion aufweisen. In beiden Fällen weist die Innenform 33 einen korrespondierenden Innendradius 91, 93, 94 auf, der ein axiales Einschieben des Einstellelements 50 bei der Montage ermöglicht. Eine Überlappung des Innenradius 91 mit dem Außenradius 72 des Haltebereichs wird erst durch eine Drehung 39 des Einstellelements 50 zu dessen Verriegelung erzielt. Zum Aufbringen eines Drehmoments zur Verriegelung des Einstellelements 50 weist dieses eine formschlüssige Mitnahme 90 auf, in die ein entsprechendes Montagewerkzeug eingreifen kann. Die Mitnahme 90 ist in Figur 1 beispielsweise als Innenvielkant ausgebildet, beim ringförmigen Einstellelement 50 gemäß Figur 4 als mehrere einzelne Vertiefungen 92, in die mehrere Zapfen eines Montagewerkzeugs eingreifen. Damit sich die selbstschneidenden Kanten 64 bei einer Drehung 39 um einen Bruchteil von 360° in die Innenform 33 des Gehäuses 12 schneiden, sind diese aus einem härteren Material, beispielsweise gehärtetem Stahl gefertigt, als die Innenform 33 des Gehäuses 12.

In einem alternativen, nicht näher dargestellten Ausführungsbeispiel ist der Haltebereich 70 und der Führungsbereich 66 des Einstellelements 50 und die korrespondierenden Gegenflächen (Verriegelungsabschnitt 32 und Zentrierabschnitt 35) des Gehäuses 12 axial vertauscht. Dabei wird bei der Montage in Axialrichtung 38 zuerst Führungsbereich 66 mit glatter Oberfläche zur Zentrierung in den korrespondierenden Zentrierabschnitt 35 eingerührt. Erst danach schiebt sich der axial angrenzende Haltebereich 70 mit dem veränderlichen Radius 72 zur Wechselwirkung in den Verriegelungsabschnitt 32 hinein. In einer weiteren Variation kann der Zentrierabschnitt 35 des Gehäuses 12 mit der selben Innenform 33 ausgebildet sein, wie der Verriegelungsabschnitt 32, wobei dann die Zentrierung des Einstellelements 50 bezüglich der Radiallagerung auf eine andere Weise sichergestellt wird.

Es sei angemerkt, dass hinsichtlich der in den Figuren und in der Beschreibung dargestellten Ausführungsbeispiele viele Kombinationsmöglichkeiten untereinander möglich sind. Insbesondere kann der Querschnitt des Haltebereichs 70 und die konkrete Ausformung des Außenprofils 80 mit der jeweiligen korrespondierenden Innenform 33 des Gehäuses 12 entsprechend der gewünschten Anwendung variiert werden. Dabei kann die axiale Verriegelung des Einstellelements 50 sowohl durch einen Reibschluss, als auch durch einen Formschluss oder eine Kombination derselben erzielt werden. Wesentlich ist dabei, dass das Einstellelement 50 mit geringer Kraft zur Montage axial in der Gehäuse 12 einschiebbar ist, und anschließend durch eine Drehung 39 zuverlässig gegen axiales Verschieben gesichert ist. Dabei ist das Aufbringen einer axialen Anpresskraft 40 von der Verriegelung entkoppelt, wodurch die Anpresskraft 40 sehr einfach definiert einstellbar ist. Durch die Wahl der Variablen n des n-eckigen Polygonzugs kann die Winkelteilung des Umfangs 76 festgelegt werden, sodass sich beispielsweise bei n = 2, 3, 4,... ein idealer Drehwinkel 39 zur axialen Verriegelung von 90°, 60°, 45°, ... ergibt. Anstelle des Schneckenrads 16 kann der Rotationskörper 14 auch als beliebiges anderes Getriebebauteil, wie beispielsweise ein Stirnzahnrad oder eine Gewindeschnecke, oder eine Rotorwelle eines Elektromotors ausgebildet sein. Vorzugsweise findet die erfindungsgemäße Getriebe-Antriebseinheit 10 Anwendung für Spindelantriebe zur Aufnahme hoher Axialkräfte, wie diese beispielsweise für Sitz-Verstellantriebe im Kraftfahrzeug erforderlich sind.

## Patentansprüche

1. Getriebe-Antriebseinheit (10), insbesondere zum Verstellen eines beweglichen Teils im Kraftfahrzeug, mit einem in einem Gehäuse (12) drehbar gelagerten Rotationskörper (14), der sich mit mindestens einer Stirnseite (42) axial an einem Einstellelement (50) abstützt, das am Gehäuse (12) fixiert ist, **dadurch gekennzeichnet, dass** das Einstellelement (50) zu dessen Montage axial in das Gehäuse (12) einschiebbar und mittels Verdrehen gegenüber dem Gehäuse (12) axial verriegelbar ist, wobei das Einstellelement (50) eine radiale Lagerfläche (56, 54) aufweist, in der der Rotationskörper (14) radial gelagert ist.

2. Getriebe-Antriebseinheit (10) nach Anspruch 1, **dadurch gekennzeichnet, dass** das Einstellelement (50) eine zylinderförmige Aussparung (52) mit einer Zylinderwand (54) aufweist, die die radiale Lagerfläche (56) bildet.

3. Getriebe-Antriebseinheit (10) nach einem der Ansprüche 1 oder 2, **dadurch gekennzeichnet, dass** das Einstellelement (50) einen Haltebereich (70) mit einem über dessen Umgang (76) veränderlichen Außenradius (72, 73, 74) aufweist.

4. Getriebe-Antriebseinheit (10) nach einem der vorhergehenden Ansprüche, **dadurch gekennzeichnet, dass** der Haltebereich (70) ein Außenprofil (80) aufweist, das mittels Verdrehen in einer korrespondierenden Innenform (32, 33) des Gehäuses (12) eine axiale Verriegelung des Einstellelements (50) bildet.

5. Getriebe-Antriebseinheit (10) nach einem der vorhergehenden Ansprüche, **dadurch gekennzeichnet, dass** das Außenprofil (80) beim Verdrehen in der Innenform (33) des Gehäuses (12) einen Formschluss mit dem Gehäuse (12) bildet, wobei sich insbesondere radiale Ausformungen (64, 86, 80) des Außenprofils (80) in die Innenform (33) des Gehäuses (12) eingraben.

6. Getriebe-Antriebseinheit (10) nach einem der vorhergehenden Ansprüche, **dadurch gekennzeichnet, dass** der Umfang (76) des axialen Haltebereichs (70) als n-eckiger Polygonzug (78) mit kontinuierlich veränderlichem Außenradius (72, 73, 74) ausgebildet ist, und der Haltebereich (70) bei der Montage des Einstellelements (50) in eine entsprechend geformte Innenform (33) des Gehäuses (12) axial einschiebbar ist.

7. Getriebe-Antriebseinheit (10) nach einem der vorhergehenden Ansprüche, **dadurch gekennzeichnet, dass** das Einstellelement (50) einen Führungsbereich (66) - insbesondere mit einem über den Umfang (76) konstanten Außenradius (68) - zur radialen Zentrierung des Einstellelements (50) in einem korrespondierenden Zentrierabschnitt (35) des Gehäuses (12) aufweist.

8. Getriebe-Antriebseinheit (10) nach einem der vorhergehenden Ansprüche, **dadurch gekennzeichnet, dass** der Rotationskörper (14) als ein auf einer Getriebespindel (15) angeordnetes Schneckenrad (16), und das Gehäuse (12) als rohrförmiger Metallkäfig ausgebildet ist.

9. Getriebe-Antriebseinheit (10) nach einem der vorhergehenden Ansprüche, **dadurch gekennzeichnet, dass** das Abstützelement (50) an der der Anschlagsfläche (46) gegenüberliegender Seite eine formschlüssige Mitnahme (90) - beispielsweise einen Innenvielkant oder mehreren Vertiefungen (92) - zur Übertragung eines Drehmoments bei der Montage des Abstützelements (50) aufweist.

10. Verfahren zum Herstellen einer Getriebe-Antriebseinheit (10), insbesondere nach einem der vorhergehenden Ansprüche, mit folgenden Fertigungsschritten:
- Einsetzen eines Rotationskörpers (14) mit einem ersten axialen Anschlag in ein Getriebegehäuse (12) mit einem korrespondierenden Gegenanschlag (26)
- axiales Einschieben eines Einstellelements (50) in das Getriebegehäuse (12), bis das Einstellelement (50) mit einer axialen Anlauffläche (46, 48, 84) an einer Stirnfläche (42) des Rotationskörpers (14) mit einer vorgebbaren Anpresskraft (40) anliegt, wobei sich der Rotationskörper (14) radial an einer radialen Lagerfläche (56, 54) des Einstellelements (12) abstützt
- axiale Verriegelung des Einstellelements (50) durch Verdrehen um einen Bruchteil einer Umdrehung des Einstellelements (50) innerhalb einer Innenform (33) des Getriebegehäuses (12)

## Claims

1. Gearbox/drive unit (10), in particular for adjusting a movable part in the motor vehicle, having a rotational element (14) which is mounted rotatably in a housing (12) and is supported axially by way of at least one end side (42) on a setting element (50) which is fixed on the housing (12), **characterized in that**, for its assembly, the setting element (50) can be pushed axially into the housing (12) and can be locked axially by rotating with respect to the housing (12), the setting element (50) having a radial bearing face (56, 54), in which the rotational element (14) is mounted radially.

2. Gearbox/drive unit (10) according to Claim 1, **characterized in that** the setting element (50) has a cylindrical cut-out (52) with a cylinder wall (54) which forms the radial bearing face (56).

3. Gearbox/drive unit (10) according to either of Claims 1 and 2, **characterized in that** the setting element (50) has a holding region (70) with an outer radius (72, 73, 74) which can be varied over its circumference (76).

4. Gearbox/drive unit (10) according to one of the preceding claims, **characterized in that** the holding region (70) has an outer profile (80) which forms an axial locking means of the setting element (50) by means of rotation in a corresponding inner shape (32, 33) of the housing (12).

5. Gearbox/drive unit (10) according to one of the preceding claims, **characterized in that**, during rotation in the inner shape (33) of the housing (12), the outer profile (80) forms a positive connection with the housing (12), in particular radial shaped-out mouldings (64, 86, 80) of the outer profile (80) digging into the inner shape (33) of the housing (12).

6. Gearbox/drive unit (10) according to one of the preceding claims, **characterized in that** the circumference (76) of the axial holding region (70) is configured as a polyline (78) which has n corners and a continuously variable outer radius (72, 73, 74), and the holding region (70) can be pushed axially into a correspondingly shaped inner shape (33) of the housing (12) during the mounting of the setting element (50).

7. Gearbox/drive unit (10) according to one of the preceding claims, **characterized in that** the setting element (50) has a guiding region (66), in particular having an outer radius (68) which is constant over the circumference (76), for radially centring the setting element (50) in a corresponding centring section (35) of the housing (12).

8. Gearbox/drive unit (10) according to one of the preceding claims, **characterized in that** the rotational element (14) is configured as a worm gear (16) which is arranged on a gearbox spindle (15), and the housing (12) is configured as a tubular metal cage.

9. Gearbox/drive unit (10) according to one of the preceding claims, **characterized in that**, on the side which lies opposite the stop face (46), the supporting element (50) has a positive driver (90), for example a polygonal socket or a plurality of depressions (92), for transmitting a torque during the mounting of the supporting element (50).

10. Method for producing a gearbox/drive unit (10), in particular according to one of the preceding claims, having the following manufacturing steps:
- insertion of a rotational element (14) having a first axial stop into a gearbox housing (12) having a corresponding mating stop (26),
- pushing a setting element (50) axially into the gearbox housing (12) until the setting element (50) bears by way of an axial run-on face (46, 48, 84) against an end face (42) of the rotational element (14) with a predefinable pressing force (40), the rotational element (14) being supported radially on a radial bearing face (56, 54) of the setting element (12),
- axial locking of the setting element (50) by rotation by a fraction of one revolution of the setting element (50) within an inner shape (33) of the gearbox housing (12).

## Revendications

1. Unité d'entraînement de transmission (10), notamment pour actionner une pièce mobile d'un véhicule automobile, comprenant un organe de rotation (14) monté à rotation dans un boîtier (12), cet organe s'appuyant axialement contre un élément de réglage (50) au moins par une face frontale (42), cet élément de réglage étant fixé au boîtier (12),
**caractérisée en ce que**
l'élément de réglage (50) est coulissant axialement dans le boîtier (12) pour son montage et il se verrouille axialement par rotation par rapport au boîtier (12),
l'élément de réglage (50) ayant une surface de palier radial (56, 54) recevant radialement l'organe de rotation (14).

2. Unité d'entraînement de transmission (10) selon la revendication 1,
**caractérisée en ce que**
l'élément de réglage (50) comporte une cavité (52) de forme cylindrique avec une paroi cylindrique (54) constituant la surface de palier radial (56).

3. Unité d'entraînement de transmission (10) selon l'une des revendications 1 ou 2,
**caractérisée en ce que**
l'élément de réglage (50) comporte une zone de fixation (70) de rayon extérieur (72, 73, 74) variable suivant sa périphérie (76).

4. Unité d'entraînement de transmission (10) selon l'une des revendications précédentes,
**caractérisée en ce que**
la zone de fixation (70) a un profil extérieur (80) qui forme un verrouillage axial de l'élément de réglage (50) par rotation dans une forme intérieure (32, 33) correspondante du boîtier (12).

5. Unité d'entraînement de transmission (10) selon l'une des revendications précédentes,
**caractérisée en ce que**
le profil extérieur (80) réalise une liaison par la forme avec le boîtier (12) lorsqu'on tourne dans la forme intérieure (33) du boîtier (12) et notamment les déformations radiales (64, 86, 80) du profil extérieur (80) s'incrustent dans la forme intérieure (33) du boîtier (12).

6. Unité d'entraînement de transmission (10) selon l'une des revendications précédentes,
**caractérisée en ce que**
la périphérie (76) de la zone de fixation axiale (70) est un polygone (78) à (n) sommets, à rayon extérieur (72, 73, 74) variant en continu et au montage de l'élément de réglage (50), la zone de fixation (70) s'emmanche axialement dans une forme intérieure correspondante (33) du boîtier (12).

7. Unité d'entraînement de transmission (10) selon l'une des revendications précédentes,
**caractérisée en ce que**
l'élément de réglage (50) comporte une zone de guidage (66) notamment avec un rayon extérieur (67) constant sur sa périphérie (76), pour le centrage radial de l'élément de réglage (50) dans un segment de centrage correspondant (35) du boîtier (12).

8. Unité d'entraînement de transmission (10) selon l'une des revendications précédentes,
**caractérisée en ce que**
l'organe de rotation (14) est réalisé sous la forme d'une roue à vis (16) installée sur une broche de transmission (15) et le boîtier (12) comme cage métallique tubulaire.

9. Unité d'entraînement de transmission (10) selon l'une des revendications précédentes,
**caractérisée en ce que**
l'élément d'appui (50) présente sur son côté en regard de la surface de butée (46), un moyen d'entraînement (90) par une liaison par la forme, par exemple une empreinte à plusieurs pans ou plusieurs cavités (92) pour transmettre le couple au moment du montage de l'élément d'appui (50).

10. Procédé de fabrication d'une unité d'entraînement de transmission (10), notamment selon l'une des revendications précédentes, comprenant les étapes de fabrication suivantes :
- mise en place d'un organe de rotation (14) avec une première butée axiale dans un boîtier de transmission (12) ayant une contrebutée (26) correspondante,
- emmanchement axial d'un élément de réglage (50) dans le boîtier de transmission (12) jusqu'à ce que l'élément de réglage (50) soit appliqué avec une force de compression prédéfinie (40) par une surface d'attaque axiale (46, 48, 84) contre la surface frontale (42) de l'organe de rotation (14), ce dernier (14) s'appuyant contre une surface de palier radial (56, 54) de l'élément de réglage (12),
- verrouillage axial de l'élément de réglage (50) par rotation d'une fraction de tour de l'élément de réglage (50) dans une forme intérieure (33) du boîtier de transmission (12).
